# EUROPÄISCHE PATENTSCHRIFT

(11) **EP 0 935 722 B1**
(45) Veröffentlichungstag und Bekanntmachung des Hinweises auf die Patenterteilung: **21.05.2003**
(21) Anmeldenummer: 98945006.9
(22) Anmeldetag: 17.07.1998
(51) Int. Cl.: F16L 3/12, F16L 3/13, H02G 3/30

(54) **KABELHALTER**
CABLE HOLDER
PORTE-CABLE

(30) Priorität: 06.09.1997 DE 19739151
(43) Veröffentlichungstag der Anmeldung: 18.08.1999
(73) Patentinhaber: ROBERT BOSCH GMBH, 70442 Stuttgart (DE)
(72) Erfinder: WEICKENMEIER, Klaus, D-76275 Ettlingen (DE); PRESTEL, Jürgen, D-87488 Betzigau (DE)
(86) Internationale Anmeldenummer: DE9802004
(87) Internationale Veröffentlichungsnummer: WO99013255

(56) Entgegenhaltungen:
- US-A- 2 108 347
- US-A- 2 948 940
- US-A- 3 262 662

## Beschreibung

### Stand der Technik

Die Erfindung geht aus von einem Kabelhalter nach der Gattung des Hauptanspruchs. Es ist schon ein Kabelhalter bekannt (DE 24 40 201 A1), der in die Zarge eines Kühlgebläses einer Brennkraftmaschine integriert ist, wobei jedoch die Gefahr des Abbrechens des Kabelhalters bei der Montage oder Demontage des Kabels besteht, da für die Zarge aus Festigkeitsgründen ein relativ unelastischer Kunststoff eingesetzt wird.

Aus der US 2,108,347 ist ein Kabelhalter zur Fixierung eines Kabels an einem Körper bekannt, der ein Halteelement mit einem bogenförmigen Abschnitt zum teilweisen Umgreifen des Kabels und eine Haltezunge mit einem freien Ende aufweist, das das Kabel gegen das Halteelement drückt.

### Vorteile der Erfindung

Der erfindungsgemäße Kabelhalter mit den kennzeichnenden Merkmalen des Hauptanspruchs hat demgegenüber den Vorteil, dass er auf einfache Art und Weise aufgebaut eine leichte Montage und Demontage des Kabels bei geringer Bruchgefahr des Kabelhalters ermöglicht. Zur Montage oder Demontage des Kabels ist lediglich mit geringer Kraft die Haltezunge zu verbiegen, während im montierten Zustand des Kabels keine Biegekräfte mehr auf die Haltezunge einwirken, sondern nur Druckkräfte auf die Stirnfläche des freien Endes, so dass ein sicherer Halt des Kabels auch bei Schüttelbeanspruchungen gewährleistet ist.

Durch die in den Unteransprüchen aufgeführten Maßnahmen sind vorteilhafte Weiterbildungen und Verbesserungen des im Hauptanspruch angegebenen Kabelhalters möglich.

Besonders vorteilhaft ist es, zu der mit einer einem Körper zugewandten Unterfläche, mit einer dem Körper abgewandten Oberfläche und Seitenflächen versehenen Haltezunge neben jeder Seitenfläche der Haltezunge eine Führungsschiene vorzusehen, die eine Führungsfläche mit einem wenigstens teilweise gegenüber der Oberfläche geneigten Abschnitt hat, der mindestens in Richtung zum freien Zungenende der Haltezunge hin mit einem geringeren Abstand zum Körper verläuft, als die Unterfläche der Haltezunge. Durch die Führungsflächen der Führungsschienen wird bei der Montage und Demontage des Kabels verhindert, daß die Haltezunge über die Elastizitätsgrenze hinaus verbogen wird und bricht.

Vorteilhaft ist es ebenfalls, den Kabelhalter aus Kunststoff zu fertigen und als integrales Teil des Körpers auszubilden.

### Zeichnung

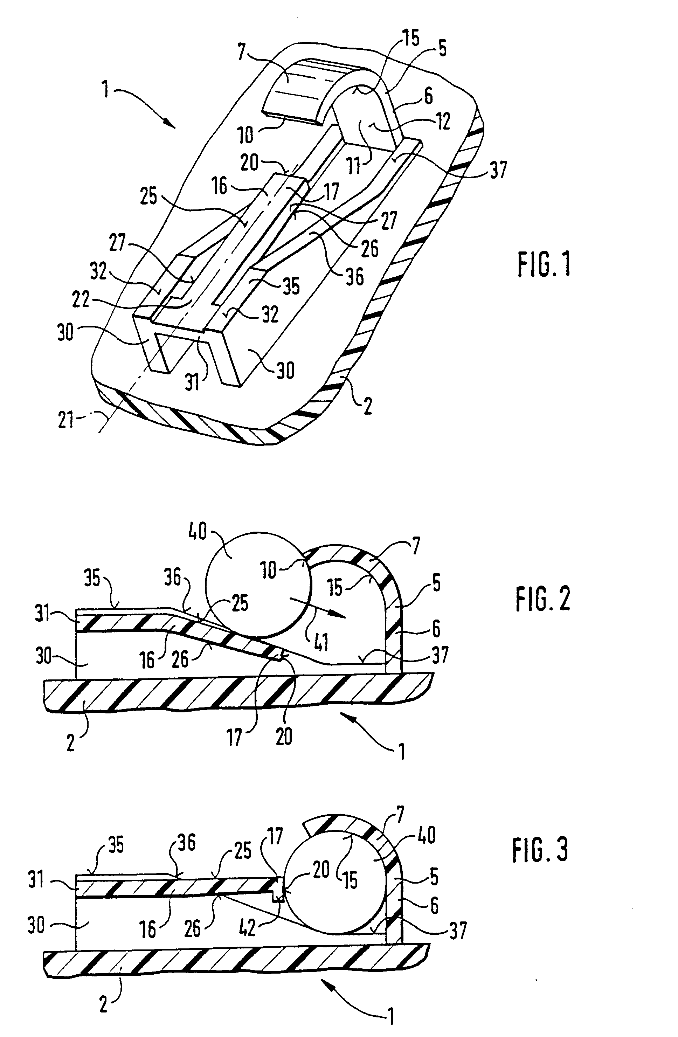

Ein Ausführungsbeispiel der Erfindung ist in der Zeichnung vereinfacht dargestellt und in der nachfolgenden Beschreibung näher erläutert. Es zeigen Figur 1 eine räumliche Darstellung des erfindungsgemäßen Kabelhalters, Figur 2 einen Schnitt durch den Kabelhalter nach Figur 1 während der Montage eines Kabels, Figur 3 einen Schnitt durch den Kabelhalter nach Figur 1 mit montiertem Kabel.

### Beschreibung des Ausführungsbeispieles

In den Figuren 1 bis 3 ist mit 1 ein Kabelhalter bezeichnet, der als selbständiges Bauteil ausgebildet ist oder integrales Teil eines Körpers 2 ist, der beispielsweise von der Zarge eines Kühlgebläses für Brennkraftmaschinen gebildet wird. Sind der Kabelhalter 1 und der Körper 2 getrennte Bauteile, so werden diese in nicht dargestellter Weise beispielsweise durch Kleben, Löten, Schweißen oder Verschrauben miteinander verbunden. Dabei können Kabelhalter 1 und Körper 2 aus unterschiedlichen Materialien bestehen. Ist der Kabelhalter 1 integraler Bestandteil des Körpers 2, so wird als Material Kunststoff verwendet.

Der Kabelhalter 1 weist ein Halteelement 5 auf, das beispielsweise einen rechteckigen Querschnitt hat und vom Körper 2 ausgehend zunächst eine sich von diesem weg erstreckende senkrechte ebene Wand 6 und daran anschließend eine bogenförmige Wand 7 hat, die beispielsweise kreisförmig verläuft und wenigstens einen Viertelkreis beschreibt. Beim dargestellten Ausführungsbeispiel verläuft die bogenförmige Wand 7 etwa über 120° und endet an einem freien Wandende 10, das beim gezeigten Ausführungsbeispiel in Richtung zum Körper 2 geneigt ist. Eine Innenwandung 11 des Halteelements 5 hat im Bereich der ebenen Wand 6 einen ebenen Abschnitt 12 und im Bereich der bogenförmigen Wand 7 einen bogenförmigen Abschnitt 15.

Der Kabelhalter 1 hat weiterhin eine federelastische Haltezunge 16, deren freies Zungenende 17 auf das Halteelement 5 hin mit einer Stirnfläche 20 gerichtet ist. Die Haltezunge 16 hat einen rechteckförmigen Querschnitt und erstreckt sich entlang einer Längsachse 21 von einem festen Zungenende 22 zum freien Zungenende 17 mit einer dem Körper 2 abgewandten Oberfläche 25, einer dem Körper 2 zugewandten Unterfläche 26 und zwei sich quer zwischen Oberfläche 25 und Unterfläche 26 verlaufenden Seitenflächen 27. Neben jeder Seitenfläche 27 verläuft mit seitlichem Abstand dazu eine Führungsschiene 30. Die Führungsschienen 30 sind dem Halteelement 5 abgewandt durch ein Joch 31 miteinander verbunden. Mit in der Zeichnung vertikalem Abstand zum Körper 2 ist mit dem Joch 31 das feste Zungenende 22 verbunden, so daß die Haltezunge 16 von dem festen Zungenende 22 ausgehend mit vertikalem Abstand zum Körper 2 zwischen den Führungsschienen 30 in vertikaler Richtung verbiegbar ist. Jede der Führungsschienen 30 hat dem Körper 2 abgewandt eine Führungsfläche 32, die ausgehend vom Joch 31 einen zur Oberfläche 25 der Haltezunge 16 parallelen Parallelabschnitt 35 hat und daran anschließend in Richtung zum Halteelement 5 zu einen gegenüber der Oberfläche 25 der Haltezunge 16 geneigten Abschnitt 36, der zum freien Zungenende 17 hin mit geringerem Abstand zum Körper 2 verläuft, als die Unterfläche 26 der Haltezunge 16. Beim dargestellten Ausführungsbeispiel geht die Führungsfläche 32 anschließend an den geneigten Abschnitt 36 in einen Anlageabschnitt 37 über, der sich parallel zur Oberfläche 25 der Haltezunge 16 bis zum Halteelement 5 erstreckt und dabei im Vergleich zum Parallelabschnitt 35 nur noch einen geringen vertikalen Abstand zum Körper 2 hat. In einer nicht dargestellten Ausführungsform kann der Anlageabschnitt 37 auch entfallen, so daß der geneigte Abschnitt 36 jeder Führungsschiene 30 bis zum Körper 2 verläuft. Das Joch 31 und die Oberfläche 25 der Haltezunge 16 verlaufen in vertikaler Höhe mit einem um wenige Zehntel geringerem Abstand zum Körper 2, als die Parallelabschnitte 35 der Führungsschienen 30. Der geneigte Abschnitt 36 der Führungsfläche 32 jeder Führungsschiene 30 beginnt etwa in der Nähe des festen Zungenendes 22, vorzugsweise in einem Abstand von dem festen Zungenende 22, der etwa 1/3 bis 1/2 der Länge der Haltezunge 16 in Richtung der Längsachse 21 entspricht. Der vertikale Abstand zwischen dem Anlageabschnitt 37 der Führungsfläche 32 jeder Führungsschiene 30 bzw. dem Körper 2 und dem in vertikaler Richtung gesehen höchsten Punkt des bogenförmigen Abschnittes 15 der Innenwandung 11 des Halteelementes 5 entspricht etwa dem Durchmesser des Querschnittes des Kabels 40.

In der Figur 2 ist der Kabelhalter 1 in einer Montagesituation dargestellt, in der das Kabel 40 parallel zum geneigten Abschnitt 36 der Führungsschienen 30 liegt und dabei die Haltezunge 16 zum Körper 2 hin durchbiegt. Bei einer weiteren Verschiebung des Kabels 40 in Richtung des Pfeiles 41 schnappt das Kabel 40 unter die ebenfalls elastisch nachgebende bogenförmige Wand 7 des Halteelementes 5 und nimmt die in Figur 3 dargestellte Lage ein, in der es zu einem großen Teil von dem Halteelement 5 umfaßt wird und die in ihre Ausgangslage zurückgebogene Haltezunge 16 mit ihrer Stirnfläche 20 etwa auf den Mittelpunkt des kreisförmigen Kabelquerschnittes gerichtet ist. Dabei sperrt die Haltezunge 16 ein Entfernen des Kabels 40 aus dem Kabelhalter 1. Erst ein erneutes gewolltes Abbiegen der Haltezunge 16 zum Körper 2 hin ermöglicht eine Demontage des Kabels 40 aus dem Kabelhalter 1. In der Figur 3 ist an dem freien Zungenende 17 eine quer zur Oberfläche 25 und Unterfläche 26 verlaufende Zungennase 42 ausgebildet, durch die eine größere Stirnfläche 20 erzielt wird, die dem Kabel 40 im montierten Zustand gemäß Figur 3 gegenübersteht.

## Patentansprüche

1. Kabelhalter (1) zur Fixierung eines Kabels (40) an einem Körper (2), mit einer federelastischen Haltezunge (16) und einem eine Innenwandung (11) aufweisenden Halteelement (5), zu dem hin die Haltezunge (16) mit ihrem freien Zungenende (17) ausgerichtet ist, wobei die Innenwandung (11) mit einem bogenförmigen Abschnitt (15) den Umfang des Kabels (40) bei Benutzung teilweise umgreift, **dadurch gekennzeichnet, daß** eine Stirnfläche (20) des freien Zungenendes (17) der Haltezunge (16) der Innenwandung (11) des Halteelementes (5) gegenüberliegend etwa auf den Mittelpunkt des kreisförmigen Kabelquerschnittes gerichtet ist, um ein Entfernen des montierten Kabels (40) aus dem Kabelhalter zu sperren.

2. Kabelhalter (1) nach Anspruch 1, **dadurch gekennzeichnet, daß** die Haltezunge (16) sich von einem mit dem Körper (2) verbindbaren festen Zungenende (22) zum freien Zungenende (17) entlang einer Längsachse (21) erstreckt und entlang dieser Längsachse (21) eine dem Körper (2) zugewandte Unterfläche (26), eine dem Körper (2) abgewandte Oberfläche (25) sowie zwei sich quer zwischen Oberfläche (25) und Unterfläche (26) erstreckende Seitenflächen (27) hat und neben jeder Seitenfläche (27) der Haltezunge (16) eine mit dem Körper (2) verbindbare Führungsschiene (30) vorgesehen ist, die eine dem Körper (2) abgewandte Führungsfläche (32) mit einem derart gegenüber der Oberfläche (25) der Haltezunge (16) geneigten Abschnitt (36) hat, daß die Führungsfläche (32) mindestens in Richtung zum freien Zungenende (17) hin mit geringerem Abstand zum Körper (2) verläuft, als die Unterfläche (26) der Haltezunge (16).

3. Kabelhalter (1) nach Anspruch 2, **dadurch gekennzeichnet, daß** der Kabelhalter (1) aus Kunststoff gefertigt ist.

4. Körper (2) mit einem Kabelhalter (1) nach Anspruch 3, **dadurch gekennzeichnet, daß** der Kabelhalter (1) ein integrales Teil des Körpers (2) ist.

## Claims

1. Cable holder (1) for fixing a cable (40) on a body (2), having a resiliently elastic retaining tongue (16) and a retaining element (5) which has an inner wall (11) and in the direction of which the retaining tongue (16) is oriented by way of its free tongue end (17), the inner wall (11) partially engaging around the circumference of the cable (40), during use, by way of an arcuate section (15), **characterized in that** an end surface (20) of the free tongue end (17) of the retaining tongue (16), located opposite the inner wall (11) of the retaining element (5), is directed approximately to the centre point of the circular cable cross section in order to prevent the installed cable (40) from being removed from the cable holder.

2. Cable holder (1) according to Claim 1, **characterized in that** the retaining tongue (16) extends along a longitudinal axis (21) from a fixed tongue end (22), which can be connected to the body (2), to the free tongue end (17) and, along said longitudinal axis (21), has a bottom surface (26), which is directed towards the body (2), a top surface (25), which is directed away from the body (2), and two side surfaces (27), which extend transversely between the top surface (25) and bottom surface (26), and provided alongside each side surface (27) of the retaining tongue (16) is a guide rail (30), which can be connected to the body (2) and has a guide surface (32), directed away from the body (2), with a section (36) which is inclined in relation to the top surface (25) of the retaining tongue (16) such that, at least in the direction of the free tongue end (17), the guide surface (32) is spaced apart at a smaller distance from the body (2) than the bottom surface (26) of the retaining tongue (16).

3. Cable holder (1) according to Claim 2, **characterized in that** the cable holder (1) is produced from plastic.

4. Body (2) with a cable holder (1) according to Claim 3, **characterized in that** the cable holder (1) is an integral part of the body (2).

## Revendications

1. Porte-câble (1) pour fixer un câble (40) sur un corps (2), comprenant une languette de maintien (16) et un élément de maintien (5) présentant une paroi interne (11) et vers lequel est dirigée la languette (16) par son extrémité libre (17), la paroi interne (11) entourant en partie, par une section (15) recourbée en forme d'arc, la périphérie du câble (40) quand le câble est monté,
**caractérisé en ce que**
la face frontale (20) de l'extrémité libre (17) de la languette de maintien (16) est située à l'opposé de la paroi interne (11) de l'élément de maintien (5) et dirigée à peu près vers le centre de la section circulaire du câble (40) de manière à empêcher celui-ci, quand il est monté, d'échapper au porte-câble.

2. Porte-câble (1) selon la revendication 1,
**caractérisé en ce que**
- la languette de maintien (16) s'étend d'une extrémité fixe (22), qui peut être reliée au corps (2), à une extrémité libre (17) selon un axe longitudinal (21) le long duquel elle présente une face inférieure (26) vers le corps (2), une face supérieure (25) à l'opposé du corps (2), et perpendiculairement à celle-ci et entre elles, des faces latérales (27),
- à côté de chaque face latérale (27) se trouve un rail de guidage (30) qui peut être relié au corps (2) et qui présente une portée de guidage (32) à l'opposé du corps, avec une section (36) inclinée par rapport à la face supérieure (25) de la languette de maintien (16) de manière que la portée (32), en allant en direction de l'extrémité libre (17) de la languette, ait sa distance au corps (2) qui diminue pour devenir inférieure à celle séparant ce corps de la face inférieure (26) de la languette de maintien (16).

3. Porte-câble (1) selon la revendication 1,
**caractérisé en ce qu'**
il est réalisé en matière plastique.

4. Corps équipé d'un porte-câble (1) selon la revendication 3,
**caractérisé en ce que**
le porte-câble (1) est une partie intégrale du corps (2).
